Europäisches Patentamt

European Patent Office

Office européen des brevets

(11) Publication number: **0 048 112 B1**

(12) **EUROPEAN PATENT SPECIFICATION**

(45) Date of publication of patent specification: **12.09.84**

(51) Int. Cl.³: **B 29 D 23/05,** B 29 F 3/04

(21) Application number: **81304028.4**

(22) Date of filing: **03.09.81**

(54) **A die assembly for forming thermoplastic tubing.**

(30) Priority: **12.09.80 US 186627**

(43) Date of publication of application:
**24.03.82 Bulletin 82/12**

(45) Publication of the grant of the patent:
**12.09.84 Bulletin 84/37**

(84) Designated Contracting States:
**AT BE CH DE FR GB IT LI LU NL SE**

(56) References cited:
**DE-A-2 333 488**
**DE-B-1 028 325**
**DE-B-2 009 914**
**US-A-3 538 209**
**US-A-3 976 414**
**US-A-3 994 644**

(73) Proprietor: **Lupke, Manfred Arno Alfred**
**35 Ironshield Crescent**
**Thornhill Ontario (CA)**

(73) Proprietor: **Lupke, Gerd Paul Heinrich**
**46 Stornoway Crescent**
**Thornhill Ontario (CA)**

(72) Inventor: **Lupke, Manfred Arno Alfred**
**35 Ironshield Crescent**
**Thornhill Ontario (CA)**
Inventor: **Lupke, Gerd Paul Heinrich**
**46 Stornoway Crescent**
**Thornhill Ontario (CA)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to a die assembly for use in the production of thermoplastic tubing, the assembly having an upstream end to be mounted on an extrusion head, a supply passage for receiving thermoplastic material from the extrusion head and delivering it to an annular passage and a sleeve and mandrel defining the annular passage for delivering thermoplastic material from the supply passage to a downstream die orifice.

The die assemblies of the invention can be used for producing single walled thermoplastic tubing or for producing double-walled thermoplastic tubing. The term "double-walled" is intended to include tubing with a two layer laminated wall as well as tubing with one corrugated wall and one smooth wall.

Die assemblies of the above mentioned kind are generally constructed as spider dies. In a spider die the mandrel is supported in the sleeve by a "spider" with radial spokes connecting the mandrel and the sleeve. The thermoplastic material is formed into an annular flow upstream of the spider, passed through the spider and then a land for ultimate extrusion as a tube. The spokes of the spider are often used for introducing additional materials to the inside of the tubing being formed, for example an additional thermoplastic flow for forming an inner wall or layer, an air flow for inflating the tube for blow moulding purposes or any elongate element such as a wire to be incapsulated by the tubing. An exemplary spider die is disclosed in DE—A—2 333 488.

To produce double-walled tubing, spider dies are constructed with three or four concentric tubes, providing inner and outer concentric supply passages for the thermoplastic material and usually at least one air passage. One such die is described in US—A—3 994 644 and partially in US—A—3 976 414. That die is a combination of a spider die for an inner smooth wall and an offset die for an outer corrugated wall. The two dies are arranged concentrically. With the off-set die, a thermoplastic material flow is led into the die from the side and then formed into a tubular flow in an especially constructed forming section. The die has four separate concentric tubes defining the various annular passages for thermoplastic material and for air flows. Another die of this general layout, but for use in the production of a double layer blow film is described in DE—B 1 028 325. That die also has an inner spider die and an outer offset die for producing the respective tubular flows.

For some applications the known spider and spider/offset combination dies suffer from certain disadvantages. The spiders produce parting lines in the material that can produce significant lines of weakening in the final product. Additionally, the spider construction is both bulky and expensive to manufacture. The arrangement of concentric tubes necessitated by this die construction further increases the size of the die and its manufacturing costs. This is particularly so with the combination dies. These problems become acute with dies designed for the production of small diameter tubing, and particularly troublesome with dies for the extrusion of small diameter multi-walled tubing.

While spiderless dies are known, for example spiral mandrel dies of the type described in DE—B—2 009 914, these do not provide a solution to the present problems as spiral mandrel dies are very large, bulky dies used for extruding film in blown film lines.

According to the invention there is provided a die assembly for use in the production of thermoplastic tubing, the assembly having an upstream end to be mounted on an extrusion head, a supply passage for receiving thermoplastic material from the extrusion head and delivering it to an annular passage, and a sleeve and a mandrel defining the annular passage for delivering thermoplastic material from the supply passage to a downsstream die orifice, wherein:

an upstream portion of the die assembly is defined by a single elongate stem;
the sleeve and mandrel are secured directly to the downstream end of the stem such that the upstream end of the annular passage is closed by the downstream end of the stem;
the supply passage is in the form of an uncored, uninterrupted bore extending from the upstream end of the die assembly through the stem and the mandrel to an outlet to the annular passage; and
the annular passage is uninterrupted between the supply passage outlet and the die orifice.

A die assembly constructed in this way can be made very small because of the absence of spider like elements and the small diameter of the supply passage. The stem permits the use of the die for extruding tubing into downstream equipment, for example a corrugator or a sizer. The tubing extruded by the die assembly is homogeneous and does not exhibit the parting lines that can be generated by spider dies.

Where air is required in the extruded tube, the die assembly may have an air passage in the form of a simple bore located beside the supply passage. This avoids the considerable increase in size that accompanies the use of a concentric tube arrangement according to the prior art.

One embodiment of the die assembly for use in the production of double-walled tubing has a mandrel with an axially extending downstream sleeve portion, a second mandrel located coaxially within the mandrel sleeve portion to define a second annular passage communicating with a second annular die orifice and a second supply passage for passing the thermoplastic material from the extrusion head to the second annular passage. The assembly is characterized in that:

the second mandrel is secured directly to the first mandrel such that the upstream end of the second annular passage is closed by the first mandrel;

the second supply passage is an un-cored, uninterrupted bore extending from the upstream end of the die assembly through the stem and both mandrels to an outlet to the second annular passage; and

the second annular passage is uninterrupted from the second outlet to the second die orifice.

This embodiment is particularly useful where a laminated wall is to be produced since the nesting of the second mandrel in the first mandrel enables the two die orifices to be located relatively close together. The absence of the spider and plural concentric tubes allows the die to be made of a very small diameter and relatively simple.

Another embodiment of the die assembly for use in the production of double-walled thermoplastic tubing includes a second sleeve and second mandrel defining a second annular passage communicating with a die orifice and a second supply passage for passing thermoplastic material from the extrusion head to the second annular passage. The assembly is characterized in that:

a second elongate stem extends from the downstream end of the first mandrel;

the second sleeve and the second mandrel are secured directly to the downstream end of the second stem such that the upstream end of the second annular passage is closed by the second stem;

the second supply passage is an uncored, uninterrupted bore extending from the upstream end of the die assembly through the first stem, the first mandrel, the second stem and the second mandrel to an outlet to the second annular passage; and

the second annular passage is uninterrupted from the second outlet to the second die orifice.

This die assembly is particularly useful when the outer wall of the resulting tubing is to be corrugated and the inner wall is to be a smooth liner in the corrugated outer wall. In this embodiment as well there are no spiders and no concentric tubes to create parting lines and size problems.

Either of the double-walled embodiments described above may be provided with air passages for delivering air to the interior of either the inner or the outer tube. According to a preferred characteristic of the invention, such air passages are uncored bores located beside the supply passages for the thermoplastic material.

The invention is diagrammatically illustrated by way of example with reference to the accompanying drawings, in which:—

Figure 1 is a sectional elevation of a first embodiment of a die assembly according to the invention used in the production of double-walled thermoplastic tubing;

Figure 2 is a sectional elevation of a second embodiment of a die assembly according to the invention used in the production of double-walled thermoplastic tubing wherein the outer wall is corrugated and the inner wall is smooth;

Figure 3 is a section taken on line 3—3 in Figure;

Figure 4 is a partly sectioned view of a third embodiment of a die assembly according to the invention; and

Figure 5 is a partly sectioned view of a fourth embodiment of a die assembly according to the invention used in the production of two-ply corrugated thermoplastic tubing.

The die assemblies shown in the drawings by way of example are all intended for use in the production of double-walled tubing wherein tubes of thermoplastic material are continuously extruded, concentrically one within the other, from coaxial die orifices. The tubes are extruded into a mould cavity formed by a bipartite mould of the recirculating mould block type, that is a mould formed by a pair of complementary mould trains each comprising an endless train of articulately interconnected mould blocks, each mould block being complementary to a mould block of the other train, and the mould blocks co-operating in pairs to form an axially extending mould cavity. Moulds of this type are well known in the art, one such mould being shown in US—A—3 981 663. However, the present invention is specifically concerned with the die assemblies, and to simplify the illustrations and moulds themselves are shown diagrammatically.

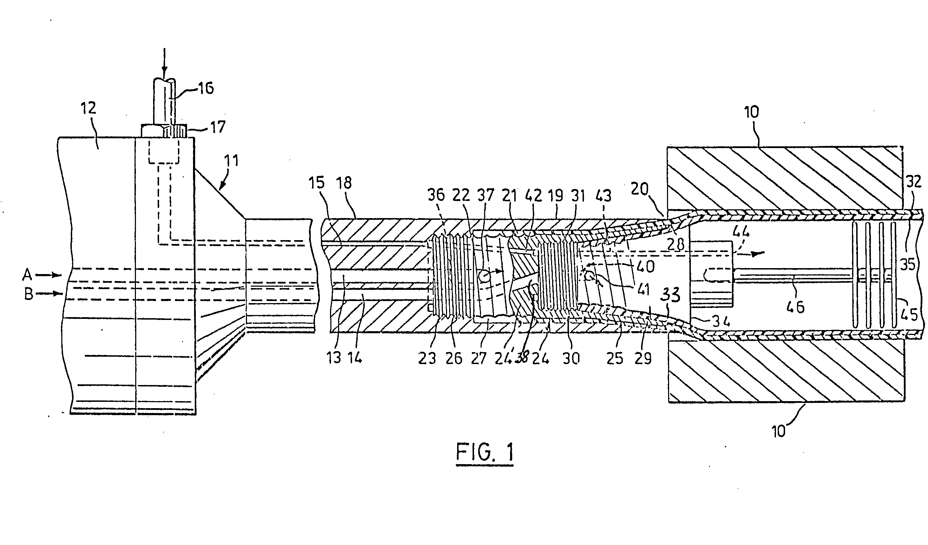

Referring to Figure 1, just two mould blocks of a bipartite mould of the recirculating type are illustrated at 10. These mould blocks have smooth interior surfaces defining a cylindrical mould cavity. A die assembly for extruding thermoplastic tubing into the cavity comprises an elongate nozzle member 11, the nozzle member 11 being attached to an extrusion head 12 in the conventional manner. In the present example the extrusion head 12 is arranged to deliver two separate streams of thermoplastic material A, B, which may be the same material or different materials according to the specification of the end product. The nozzle member 11 provides two longitudinally extending supply passages 13, 14 which are positioned to receive the streams of thermoplastic material A, B from the extrusion head for delivering the materials to the delivery end of the nozzle member 11. Also provided in the nozzle member is a longitudinally extending internal air passage 15 for receiving pressurized air from a supply pipe 16 via a coupling 17.

The nozzle member 11 has an elongate cylindrical stem 18, which terminates in a cylindrical sleeve portion 19. The free end of the sleeve portion 19 is chamfered, forming a peripheral lip 20. The sleeve portion 19 encloses a recess 21 of circular cross-section extending axially inwards from the lip 20 and being formed with an annular step 22 at its base. The step 22 defines an axially extending internally threaded socket 23 forming one member of a two-part coupling.

A die mandrel 24 is located within the recess 21 coaxially with the sleeve portion 19. The mandrel 24 has a cylindrical stem or plug 24' terminating in a slightly flared sleeve portion 25. One end of the stem 24' is formed with an axially extending, externally threaded spigot 26 which is engageable in the socket 23 for locating the mandrel operatively within the recess 21. When the mandrel 24 is so located, its external surface is spaced from the internal surface of the sleeve portion 19 to define therewith an annular passage 27.

The flared sleeve portion of the mandrel 24 similarly defines a peripheral lip 28 at its end, and further defines a second recess or circular cross-section in which a second mandrel 29 is coaxially located, the second mandrel 29 being coupled to the first mandrel 24 by means of an axially extending externally threaded spigot 30 at the base of the second mandrel 29 which engages in an axially extending internally threaded socket 31 provided in the stem 24 at the base of the second recess. The lip 28 of the mandrel 24 defines with the lip 20 of the sleeve portion 19 a first, outer annular die orifice from which an outer tube of thermoplastic material 32 is extruded. The mandrel 29 has a flared portion 33 terminating in a peripheral lip 34 which defines with the mandrel lip 28 of a second, inner annular die orifice from which an inner tube of thermoplastic material 35 is extruded.

The stem portion 24' of the mandrel 24 is formed with a first internal flow passage 36 having an inlet positioned to communicate with the supply passage 13 to receive thermoplastic material therefrom, and an outlet 37 positioned to communicate with the annular distribution chamber 27. A second flow passage 38 is provided in the stem portion 24', this flow passage having an inlet positioned to communicate with the supply passage 14 in the nozzle member 11 and an outlet positioned to deliver thermoplastic material to the inlet of a flow passage 40 provided in the second mandrel 29. The flow passage 40 similarly has an outlet 41 communicating with the annular distribution chamber defined by the opposed surfaces of the mandrel 29 and the sleeve 25. Thus, in operation of the device, the thermoplastic material A is delivered via the supply passage 13, the flow passage 36 and the outlet 37, to the annular distribution chamber 27 of the first die, where it finds an uninterrupted annular flow path extending from the outlet 37 to the outer die orifice. Similarly, the thermoplastic material B is delivered via the supply passage 14, the flow passage 38, the flow passage 40 and the outlet 41 to the annular distribution chamber of the second die, where it finds an uninterrupted annular flow path extending from the outlet 41 to the inner die orifice formed by the lips 28 and 34.

In the present example the stem portions of the mandrels 24 and 29 are formed with helical or spiral grooves to induce a spiral component of flow to the thermoplastic materials as they are delivered along the respective distribution chambers.

For the purpose of moulding the tubing within the mould cavity, pressurized air from the supply pipe 16 is delivered via the air passage 15 and serially connected air passages 42, 43 extending through the stem portions of the mandrels 24 and 29. The air is delivered interiorly of the inner die orifice via an outlet 44, that is, to the interior of the tube 35. To maintain an air pressure suitable for moulding the tubing within the mould cavity, a set of annular baffles 45 is provided, this set of baffles being mounted on a rod 46 extending axially forwards from the mandrel 29.

Although this embodiment of the invention has been described with particular reference to the production of double-walled tubing, it could obviously be adapted to the production of single-walled tubing by providing a single die stage, or to the production of multiple-walled tubing by providing additional die stages.

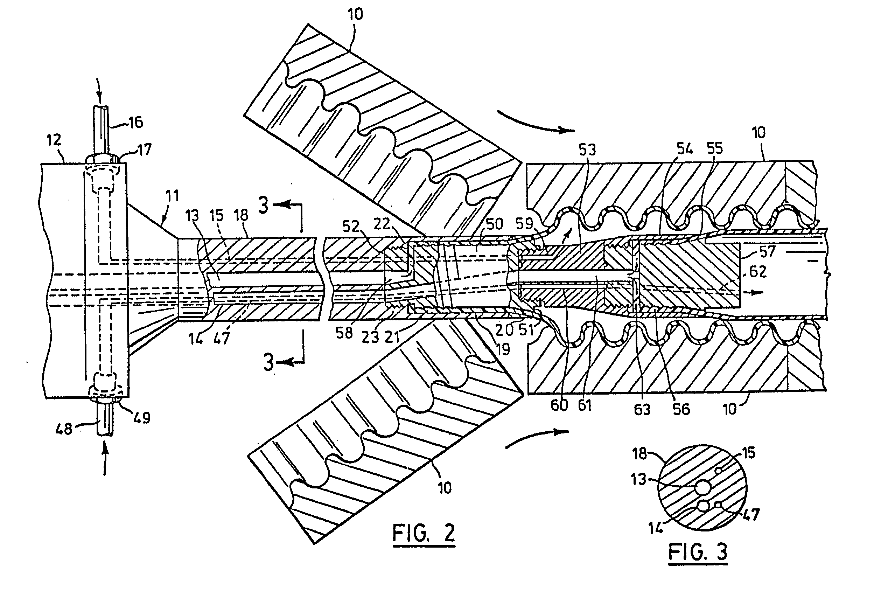

The second die assembly shown in Figures 2 and 3 is basically similar to the first shown in Figure 1, and the same reference numerals are used to denote corresponding parts. However, this die assembly is specifically designed for use in the production of tubing having a corrugated outer wall and a smooth inner wall. Accordingly, the mould blocks 10 are appropriately contoured for moulding the outer wall, and two pressurized air supplies are required for moulding the two extruded tubes. The outer wall could, of course, alternatively be moulded by external vacuum rather than internal pressure.

The nozzle member 11 is essentially the same as the nozzle member 11 shown in Figure 1 but it includes a second air passage 47 for delivering air at a second pressure received from an air supply pipe 48 connected to the nozzle member 11 by a coupling 49. The first die stage of this assembly includes a first mandrel 50 which, instead of being formed with a sleeve portion, provides a peripheral lip 51 which co-operates with the lip 20 to define a first annular die orifice. The mandrel 50 has an axially extending externally threaded spigot 52 which engages in the threaded socket 23 of the nozzle member 11 to locate the mandrel coaxially within the sleeve portion 19. A second nozzle member is coupled to the mandrel 50 coaxially therewith, the second nozzle member including a generally cylindrical elongate stem 53 and a sleeve portion 54, this sleeve portion providing a peripheral lip 55 and defining a second internal recess 56 of circular cross-section extending coaxially therefrom. A second mandrel 57 is coupled to the second nozzle member coaxially therewith, the second mandrel 57 defining with the lip 55 a second annular die orifice. The second nozzle member and the mandrel 57 are respectively coupled to the mandrel 50 and the cylindrical stem 53 of the second nozzle member by respective axially extending screw threaded couplings which are substantially identical with the coupling 23, 52.

The first mandrel 50 provides an internal flow passage 58 having an inlet positioned to receive thermoplastic material A from the supply passage 13 and an outlet positioned to deliver the material to the annular chamber 21 of the first die stage. This mandrel also provides internal through-passages positioned to communicate with the passages 14, 15 and 47 of the nozzle member 11 for delivering thermoplastic material B and pressurized air to the next die stage. The cylindrical stem 53 provides an air passage 59 for delivering air from the passage 15 to the interior of the outer tube formed from material A for moulding this against the wall of the mould cavity. The cylindrical stem 53 of the second nozzle member also includes a second air flow passage 60 and a flow passage 61 for delivering air and thermoplastic material to respective passages 62 and 63 in the second mandrel 57. As is evident from Figure 2, the flow passage 63 has an inlet positioned to communicate with the flow passage 61 to receive thermoplastic material B therefrom and an outlet for delivering the material to the distribution chamber 56 of the second die stage. The internal air passage 62 receives air from the supply pipe 48 and delivers it to the interior of the inner tube of thermoplastic material B.

Auxiliary means may be provided for assisting the joining of the two extruded tubes while they are plastic. In order to maintain the air pressure within the inner tube, a baffle arrangement similar to the baffle arrangement 45 of Figure 1 may be arranged in a similar manner.

As in the first embodiment of the invention shown in Figure 1, the distribution chambers 21 and 56 of the two die stages each define an uninterrupted annular flow path extending from the respective outlet into the chamber to the respective die orifice at the end of the chamber. Also, as in the first embodiment, the stem portins of the mandrels may be formed with helical or spiral grooves to assist the distribution of material by inducing a spiral component of flow thereto.

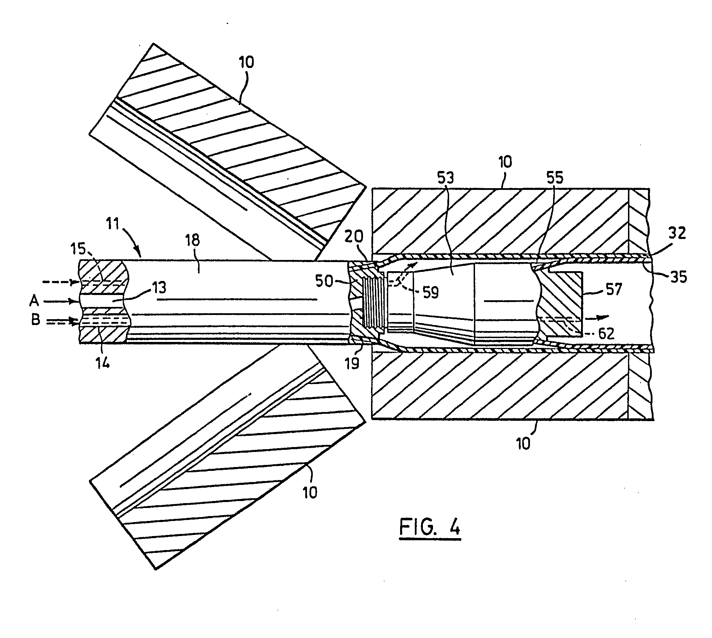

The third die assembly shown in Figure 4 is identical to the die assembly shown in Figures 2 and 3 and corresponding parts are denoted by the same reference numerals. The essential difference between this assembly and the previous one is that the mould blocks 10 have smooth interior walls defining a smooth-walled cavity. This die assembly is designed specifically for use in the production of smooth-walled double-ply tubing. As in the preceding embodiments, by reason of the fact that the die components are coupled together in coaxial relationship by axially extending coupling means, each of the thermoplastic materials is delivered into a respective distribution chamber which provides an uninterrupted annular flow path extending from the outlet into the changer to the respective annular die orifice.

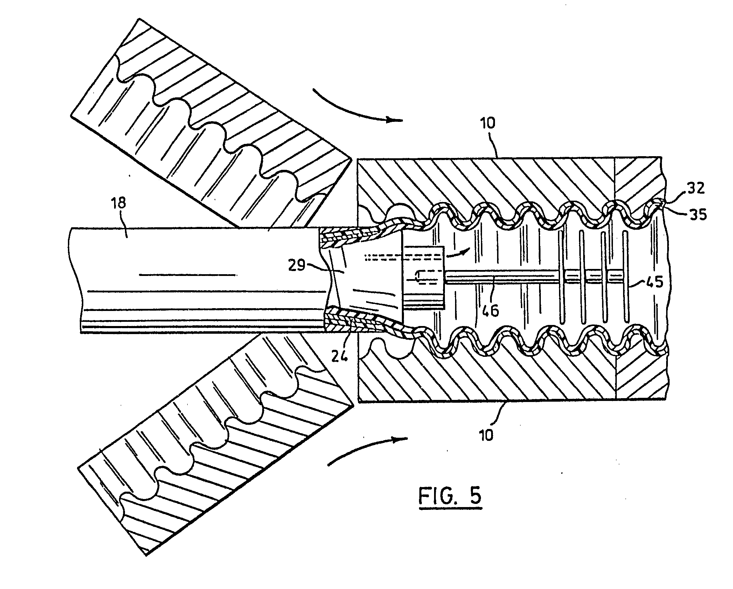

Figure 5 shows a detail of a fourth die assembly which is identical in construction to the die assembly shown in Figure 1, the same reference numerals being used to denote corresponding parts. The essential difference between this embodiment of the invention and the first embodiment of the invention is that the mould blocks 10 have contoured interior surfaces appropriate to the moulding of the corrugated tubing.

**Claims**

1. A die assembly for use in the production of thermoplastic tubing, the assembly having an upstream end to be mounted on an extrusion head (12), a supply passage (13) for receiving thermoplastic material from the extrusion head and delivering it to an annular passage (27), and a sleeve (19) and a mandrel 24 defining the annular passage for delivering thermoplastic material from the supply passage to a downstream die orifice, characterized in that:

an upstream portion of the die assembly is defined by a single elongate stem 118);
the sleeve (19) and mandrel (24) are secured directly to the downstream end of the stem (18) such that the upstream end of the annular passage is closed by the downstream end of the stem (18);
the supply passage (13, 36) is in the form of an uncored, uninterrupted bore extending from the upstream end of the die assembly through the stem (18) and the mandrel (24) to an outlet (37) to the annular passage (27); and
the annular passage (27) is uninterrupted between the supply passage outlet (37) and the die orifice.

2. A die assembly according to claim 1, with a longitudinally extending air passage (15) for delivering air to the interior of the tubing as it is formed, characterized in that the air passage (15, 42, 43) is an uncored bore located beside the supply passage (13, 36).

3. A die assembly according to claim 1 or claim 2, for use in the production of double-walled thermoplastic tubing, wherein the mandrel has an axially extending downstream sleeve portion, a second mandrel (29) is located coaxially within the mandrel sleeve portion (24, 19) to define a second annular passage communicating with a second annular die orifice and a second supply passage (14) passes thermoplastic material from the extrusion head to the second annular passage, characterized in that:

the second mandrel (29) is secured directly to the first mandrel (24) such that the upstream end of the second annular passage is closed by the first mandrel (24);

the second supply passage (14, 38, 40) is an uncored, uninterrupted bore extending from the upstream end of the die assembly through the stem (18) and both mandrels (24, 29) to an outlet (41) to the second annular passage and;

the second annular passage is uninterrupted from the second outlet (41) to the second die orifice.

4. A die assembly according to claim 1 or claim 2, for use in the production of double-walled thermoplastic tubing, including a second sleeve and a second mandrel defining a second annular passage communicating with a second die orifice, and a second supply passage for passing thermoplastic material from the extrusion head to the second annular passage, characterized in that:

a second elongate stem (53) extends from the downstream end of the first mandrel (50);

the second sleeve (54) and the second mandrel (57) are secured directly to the downstream end of the second stem (53) such that the upstream end of the second annular passage is closed by the second stem (53);

the second supply passage (14, 61) is an uncored, uninterrupted bore extending from the upstream end of the die assembly through the first stem (18), the first mandrel (50), the second stem (53) and the second mandrel (57) to an outlet (63) to the second annular passage and;

the second annular passage is uninterrupted from the second outlet to the second die orifice.

5. A die assembly according to claim 4, with an air passage for delivering air to the interior of tubing extruded from the first die orifice, characterized in that the air passage is an uncored bore (15, 59) located beside the first and second supply passages (15, 58, 14, 61).

6. A die assembly according to any one of claims 3 to 5, with an air passage for delivering air to the interior of the double-walled tubing as it is formed, characterized in that the air passage is an uncored bore (15, 43, 47, 62) located beside the first and second supply passages (13, 36/13, 58, 14, 41/14, 61).

## Revendications

1. Montage de filière devant servir à la fabrication de tube thermoplastique, le montage comportant une extrémité d'amont à monter sur une tête d'extrusion (12), un passage d'alimentation (13) destiné à recevoir de la matière thermoplastique de la tête d'extrusion et à l'amener à un passage annulaire (27), ainsi qu'un manchon (19) et un mandrin (24) délimitant le passage annulaire pour amener la matière thermoplastique du passage d'alimentation à un orifice de filière d'aval, caractérisé en ce que:

Un tronçon d'amont du montage de filière est défini par une seule tige oblongue (18);

Le manchon (19) et le mandrin (24) sont fixés directement à l'extrémité d'aval de la tige (18) de sorte que l'extrémité d'amont du passage annulaire est fermée par l'extrémité d'aval de la tige (18);

Le passage d'alimentation (13, 36) est sous la forme d'un alésage uninterrompu, sans noyau, s'étendant depuis l'extrémité d'amont du montage de filière à travers la tige (18) et le mandrein (24) jusqu'à une sortie (37) débouchant dans le passage annulaire (27);

et le passage annulaire (27) est ininterrompu entre la sortie (37) du passage d'alimentation et l'orifice de filière.

2. Montage de filière selon la revendication 1, comportant un passage d'air s'étendant longitudinalement (15), destiné à amener de l'air à l'intérieur du tube à mesure de sa formation, caractérisé en ce que le passage d'air (15, 42, 43) est un alésage sans noyau situé à côté du passage d'alimentation (13, 36).

3. Montage de filière selon la revendication 1 ou 2, devant servir à la fabrication de tube thermoplastique à double paroi, dans lequel le mandrin comporte un tronçon de manchon d'aval s'étendant axialement, un second mandrin (29) est placé coaxialement dans la partie de manchon (24, 19) du mandrin pour définir un second passage annulaire communiquant avec un second orifice de filière annulaire et un second passage d'alimentation (14) amène de la matière thermoplastique de la tête d'extrusion au second passage annulaire, caractérisé en ce que:

le second mandrin (29) est fixé directement au premier mandrin (24) de sorte que l'extrémité d'amont du second passage annulaire est fermée par le premier mandrin (24);

Le second passage d'alimentation (14, 38, 40) est un alésage ininterrompu, sans noyau, s'étendant depuis l'extrémité d'amont du montage de filière à travers la tige (18) et les deux mandrins (24, 29) jusqu'à une sortie (41) débouchant dans le second passage annulaire; et

le second passage annulaire est ininterrompu depuis la seconde sortie (41) jusqu'au second orifice de filière.

4. Montage de filière selon la revendication 1 ou 2, devant servir à la fabrication de tube thermoplastique à double paroi, comportant un second manchon et un second mandrin définissant un second passage annulaire communiquant avec un second orifice de filière, et un second passage d'alimentation pour l'amenée de matière thermoplastique de la tête d'extrusion au second passage annulaire, caractérisé en ce que:

une seconde tige oblongue (53) s'étend à partir de l'extrèmité d'aval du premier mandrin (50);

Le second manchon (54) et le second mandrin (57) sont fixés directement à l'extrémité d'aval de la seconde tige (6) de sorte que l'extrémité d'amount du second passage annulaire est fermée par la seconde tige (53);

Le second passage d'alimentation (14, 61) est un alésage ininterrompu, sans, noyau, s'étendant à partir de l'extrémité d'amont du montage de filière à travers la première tige (18), le premier mandrin (50), la seconde tige (53) et le second mandrin (57) jusqu'à une sortie (63) débouchant dans le second passage annulaire; et

Le second passage annulaire est ininterrompu de la seconde sortie jusqu'au second orifice de filière.

5. Montage de filière selon la revendication 4, comportant un passage d'air pour l'amenée d'air à l'intérieur du tube extrudé à partir du premier orifice de filière, caractérisé en ce que le passage d'air est un alésage sans noyau (15, 59) situé à côté des premier et second passages d'alimentation (15, 58, 14, 61).

6. Montage de filière selon l'une quelconque des revendications 3 à 5, comportant un passage d'air pour l'amenée d'air à l'intérieur de tube à double paroi à mesure de sa formation, caractérisé en ce que le passage d'air est un alésage sand noyau (15, 43, 47, 62) situé à côté des premier et second passages d'alimentation (13, 36/13, 58/14, 41/14, 61).

**Patentansprüche**

1. Mundstückvorrichtung für die Verwendung bei der Hestellung thermoplastischer Röhren mit einem an einem Strangpreßkopf (12) zu befestigenden Aufstromende, einem Beschickungsdurchgang (13) zur Aufnahme von thermoplastischem Material aus dem Strangpreßkopf und zur Abgabe desselben an einen ringförmigen Verbindungsgang (27) und einer Hülse (19) und einem Dorn (24), der den ringförmigen Verbindungsgang für die Abgabe von thermoplastischem Material aus dem Beschickungsdurchgang an eine Abstrom-Mundstücköffnung definiert, dadurch gekennzeichnet, daß ein Aufstromabschnitt der Mundstückvorrichtung durch einen einzelnen länglichen Stiel (18) definiert ist, die Hülse 19 und der Dorn (24) direkt an dem Abstromende des Stiels (18) derart befestigt sind, daß das Aufstromende des ringförmigen Verbindungsganges durch das Abstromende des Stiels (18) verschlossen ist, der Beschickungsdurchgang (13, 36) in der Form einer kernfreien ununterbrochenen Bohrung vorliegt und sich von dem Aufstromende der Mundstückvorrichtung über den Stiel (18) und den Dorn (24) zu einem Auslaß (37) zu dem ringförmigen, Verbindungsgang (27) erstreckt und der ringförmige Verbindungsgang (27) zwischen dem Beschickungsgangsauslaß (37) und der Mundstücköffnung ununterbrochen ist.

2. Mundstückvorrichtung nach Anspruch 1 mit einem sich in Längsrichtung erstreckenden Luftgang (15) zur Abgabe von Luft an das Innere der Röhre, wenn diese gebildet wird, dadurch gekennzeichnet, daß der Luftgang (15, 42, 43) eine neben dem Beschickungsdurchgang (13, 36) angeordnete kernlose Bohrung ist.

3. Mundstückvorrichtung nach Anspruch 1 oder Anspruch 2 für die Verwendung bei der Herstellung doppelwandiger, thermoplastischer Röhren, bei der der Dorn einen sich axial erstreckenden Abstromhülsenabschnitt besitzt, ein zweiter Dorn (29) koaxial in dem Dornhülsenabschnitt (24, 19) angeordnet ist und so einen zweiten ringförmigen Verbindungsgang definiert, der in Verbindung mit einer zweiten ringförmigen Mundstücköffnung steht, und ein zweiter Beschickungsdurchgang (14) thermoplastisches Material von dem Strangpreßkopf zu dem zweiten ringförmigen Verbindungsgang führt, dadurch gekennzeichnet, daß der zweite Dorn (29) direkt an dem ersten Dorn (24) derart befestigt ist, daß das Aufstromende des zweiten ringförmigen Verbindungsgangs durch den ersten Dorn (24) geschlossen ist, der zweite Beschickungsdurchgang (14, 38, 40) eine kernlose ununterbrochene Bohrung ist, die sich von dem Aufstromende der Mundstückvorrichtung über den Stiel (18) und beide Dorne (24, 29) zu einem Auslaß (41) zu dem zweiten ringförmigen Verbindungsgang erstreckt und der zweite ringförmige Verbindungsgang von dem zweiten Auslaß (41) zu der zweiten Mundstücköffnung ununterbrochen ist.

4. Mundstückvorrichtung nach Anspruch 1 oder Anspruch 2 für die Verwendung bei der Herstellung doppelwandiger thermoplasticher Röhren mit einer zweiten Hülse und einem zweiten Dorn, der einen zweiten ringförmigen Verbindungsgang definiert, welcher mit einer zweiten Mundstücköffnung in Verbindung steht, und einem zweiten Beschickungsdurchgang zur Überführung von thermoplastischem Material von dem Strangpreßkopf zu dem zweiten ringförmigen Verbindungsgang, dadurch gekennzeichnet, daß ein zweiter länglicher Stiel (53) sich von dem Abstromende des ersten Dorns (50) aus erstreckt, die zweite Hülse (54) und der zweite Dorn (57) direkt an dem Abstromende des zweiten Stiels (53) derart befestigt sind, daß das Aufstromende des zweiten ringförmigen Verbindungsganges durch den zweiten Stiel (53) verschlossen ist, der zweite Beschikkungsdurchgang (14, 61) eine kernlose ununterbrochene Bohrung ist, die sich von dem Aufstromende der Mundstückvorrichtung über den ersten Stiel (18), den ersten Dorn (50), den zweiten Stiel (53) und den zweiten Dorn (57) zu einem Auslaß (63) zu dem zweiten ringförmigen Verbindungsgang erstreckt, und der zweite ringförmige Verbindungsgang von dem zweiten Auslaß zu der zweiten Mundstücköffnung ununterbrochen ist.

5. Mundstückvorrichtung nach Anspruch 4 mit einem Luftgang für die Abgabe von Luft an das Innere der aus der ersten Mundstücköffnung stranggepreßten Röhren, dadurch gekennzeichnet, daß der Luftgang eine kernlose Bohrung (15, 59) ist, die neben dem ersten und zweiten Beschickungsdurchgang (15, 58, 14, 61) angeordnet ist.

6. Mundstückvorrichtung nach einem der Ansprüche 3 bis 5 mit einem Luftgang zur Abgabe von Luft an das Innere der doppelwandigen Röhre, wenn diese gebildet wird, dadurch gekennzeichnet, daß der Luftgang eine kernlose Bohrung (15, 43, 47, 62) ist, die neben dem ersten und zweiten Beschickungsdurchgang (13, 36/13, 58, 14, 41/14, 61) angeordnet ist.

FIG. 1

0 048 112

FIG. 2

FIG. 3

FIG. 4

0 048 112

3

FIG. 5